# EUROPÄISCHE PATENTANMELDUNG

(11) **EP 4 212 784 A1**
(43) Veröffentlichungstag der Anmeldung: **19.07.2023**
(21) Anmeldenummer: 23151071.0
(22) Anmeldetag: 11.01.2023
(51) Int. Cl.: F24D 19/08, B01D 11/04, F24D 19/10, F24H 15/12, F25B 49/02

(54) **FLÜSSIG-EXTRAKTION VON KOHLENWASSERSTOFFEN**

(30) Priorität: 14.01.2022 DE 102022100817
(71) Anmelder: Vaillant GmbH, 42859 Remscheid NRW (DE)
(72) Erfinder: Wohlfeil, Arnold, 42799 Leichlingen (DE)
(74) Vertreter: Popp, Carsten

(57) **Zusammenfassung**

Mittels einer Flüssig-Flüssigextraktion wird leckagebedingt ausgetretener Kohlenwasserstoff eines Wärmeübertragers einer Wärmepumpe aus dem Wärmeträgerfluidkreis extrahiert und entsorgt.

## Beschreibung

Die Erfindung betrifft die Entfernung von entzündlichen oder schädlichen gasförmigen Kohlenwasserstoffen, die auch teil- oder per-halogeniert sein können, in einem Heizungskreislauf oder Kühlsolekreislauf, im Folgenden als Wärmeträgerfluidkreislauf bezeichnet, eines Wärmepumpensystems durch Flüssig-Extraktion.

Einerseits ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Dasselbe gilt für Sole-Split-Anlagen, bei denen sich Sole im Heizkreis befindet und auch für Klimaanlagen. Je nachdem, welche Zwecke ein solcher Wärmeträgerfluidkreislauf erfüllen oder welche Umgebungsbedingungen er zu bewältigen hat, können neben dem eigentlichen Wärmeträger, meistens Wasser, auch Additive dem Wärmeträgerfluidkreislauf hinzugesetzt werden. Hierbei handelt es sich meist um Frostschutzmittel oder Korrosionsschutzmittel.

Andererseits werden inzwischen in Wärmepumpen und in Kühl- und Gefrieranlagen entzündliche Kältemittel als Arbeitsfluide verwendet, die den Vorteil haben, bei ihrer versehentlichen Freisetzung weder das Klima noch die Ozonschicht zu schädigen oder deren Freisetzung wenigstens weniger schädlich ist. Eine solche versehentliche Freisetzung ist aufgrund deren Brennbarkeit und sonstigen Schadwirkung aber möglichst zu vermeiden. In Kältekreisen, in denen solche Arbeitsfluide eingesetzt werden, können solche unbeabsichtigten Freisetzungen über die Wärmeübertrager passieren, die als Verflüssiger und Verdampfer zum Einsatz kommen und die mit dem Wärmeträgerfluidkreislauf, also dem Heizungskreislauf oder Kühlsolekreislauf, über ihre Austauschflächen verbunden sind. Im Unterschied zu herkömmlichen Gasbrennkesseln steht das Arbeitsfluid im Kältekreis unter einem höheren Druck als das Wärmeträgerfluid im Heizkreis oder Kühlsolekreis, es könnte also bei Leckagen leicht in den unter geringerem Druck stehenden Wärmeträgerfluidkreislauf gelangen.

Um dies so weit wie möglich zu verhindern, werden im herkömmlichen Stand der Technik teure doppelwandige Wärmeübertrager verwendet, wie sie beispielsweise in den Patentschriften DE 11 2019 001 344 T5, DE 11 2019 001 350 T5 und DE 11 2019 001 351 T5 für Wärmepumpen beschrieben sind, die das Arbeitsfluid R290 gegen eine Wasser-Propylenglykol-Sole als Wärmeträgerfluid führen. Neben dem hohen Preis führt dieser Einsatz aber zu Effizienzverlusten, da die Materialien, wie beispielsweise etwa Edelstahl, Wärme schlecht leiten und der dünne Luftspalt zwischen den Wärmeübertragerflächen wie eine Isolierung wirkt. Praktisch bedeutet dies, dass höhere Temperaturdifferenzen in den Wärmeübertragern eingestellt werden müssen, was den Wirkungsgrad von Wärmepumpen herabsetzt. Diese doppelwandigen Wärmeübertrager können das Risiko zwar verringern, aber ausschließen können sie es nicht.

Solche gasförmigen Bestandteile, die trotzdem über Leckagen in den Wärmeträgerfluidkreislauf gelangen, könnten zwar mittels Gasabscheidern abgeschieden werden, es verbleiben aber gelöste und sehr feinblasige Gasbestandteile. Diese könnten bei Temperatur- und Druckänderungen Probleme bereiten, indem sie an ungünstigen Stellen im Wärmeträgerfluidkreislauf ausgasen, wenn sich ihre Löslichkeit temperaturbedingt verschlechtert. Dies betrifft vor allem das inzwischen häufig eingesetzte Propan im Kältemittel R290, aber auch Isobutan im Kältemittel R600a, n-Butan in R600, Propylen in R1270 sowie weitere Alkane und auch sonstige teilhalkogenierte oder per-halogenierte Kohlenwasserstoffe, seien es Füllungen in Altanlagen oder solche mit Ersatzkältemitteln wie R32.

Als Frostschutzmittel werden wässrigen Wärmeträgerfluidkreisläufen bevorzugt Propylenglykol oder Ethylenglykol zugesetzt. Dies hat den Vorteil der beliebigen Mischbarkeit mit Wasser. Propylenglykol ist außerdem im Falle von Havarien gegenüber Mensch und Umwelt ungiftig. Ein Vorteil dieser Frostschutzmittel ist dabei, dass sich die Löslichkeit von R290 sowie anderen Kohlenwasserstoffen erheblich vergrößert. Zur Vermeidung von Korrosion wird üblicherweise ein Korrosionsinhibitor eingesetzt.

Moderne Wärmepumpen können auch umschaltbar zwischen Heizbetrieb und Klimabetrieb ausgelegt werden und außerdem Warmwasser bereiten. Dies erhöht die im System auftretenden Temperaturänderungen noch weiter. Weitere Probleme können sich daraus ergeben, dass viele Wärmepumpen nicht ganzjährig in Betrieb sind, Leckagen aber auch außerhalb des Betriebs auftreten können, etwa wenn sich Sole in einer verbundenen solarthermischen Anlage zu stark aufheizt.

Leckagebedingt aus einem Wärmeübertrager in einen der Solekreisläufe eingetretenes Arbeitsfluid soll daher schnellstmöglich bis auf unschädliche Reste aus dem Solekreislauf entfernt werden. Dann kann es bei Temperaturschwankungen auch nicht an ungünstigen Stellen ausgasen und beim Mischen mit Luft zündfähige Gemische bilden.

Dies geschieht dadurch, dass eine zweite Phase gebildet wird, die das Kältemittel aus der Sole extrahiert und löst. Diese zweite Phase wird von der Sole getrennt und mit bekannten Mitteln regeneriert. Es ist jedoch nicht möglich, diese zweite Phase durch den gesamten Wärmeträgerfluidkreislauf ständig mitzuführen.

Als zweite Phase dienen langkettige Kohlenwasserstoffe, z.B. Öl und Fette, die im üblichen Temperaturbereich des Wärmeträgerfluids flüssig sind, sich aber mit einer wässrigen Lösung nicht mischen und im Übrigen weitgehend unbrennbar oder schwer entflammbar sind. Diese lösen Kohlenwasserstoffe gut.

Zunächst muss jedoch detektiert werden, dass eine Leckage aufgetreten ist. Falls dies der Fall ist, wird das Wärmeträgerfluid in einen Bypass geleitet, der eine Zugabe für ein Extraktionsmittel vorsieht, dann eine intensive Durchmischung von Extraktionsmittel und Wärmeträgerfluid bewirkt und danach eine Trennung der beiden Phasen durchführt. Innerhalb des Bypasses kann eine Rezirkulation vorgesehen werden.

Das Detektieren kann mittels eines automatischen Gasabscheiders erfolgen, in dessen abgeschiedenen Gas eine Messung entzündlicher Gase erfolgt. Dieser wird unmittelbar stromabwärts des betreffenden Wärmeübertragers angeordnet. Dies hat den Vorteil, dass ungelöstes gasförmiges Arbeitsfluid, etwa in der Folge einer größeren Leckage, direkt ins Freie abgeführt wird, bevor es in Lösung gehen kann. Das betrifft vor allem klimaunschädliche Kohlenwasserstoffe wie z.B. R290. Falls Kohlenwasserstoffe mit größerem Schadenspotenzial verwendet werden, muss eine Auffangvorrichtung vorgesehen werden, beispielsweise eine Kältefalle. Möglich ist auch eine Messung direkt im Wärmeträgerfluid. Es ist außerdem sinnvoll, die Umwälzpumpe des betreffenden Wärmeträgerfluidkreises stromaufwärts des betreffenden Wärmeübertragers anzuordnen.

Reines Wasser löst Kohlenwasserstoffe bekanntlich sehr schlecht, das Arbeitsfluid R290 - Propan - wird aber bei höheren Drücken und niedriger Temperatur in Wasser vergleichsweise gut gelöst. Kommt auch noch Glykol hinzu, steigt die Löslichkeit im Arbeitsfluid weiter an. Solches gilt analog auch für andere Kohlenwasserstoffe.

Die Kombination von Propan bzw. R290 als Arbeitsfluid für Kältemaschinen und Propylenglykol als Arbeitsfluid ist bereits gut bekannt. In der Druckschrift "Frank Hillerns, Thermophysikalische Eigenschaften und Korrosionsverhalten von Kälteträgern, DIE KÄLTE Klimatechnik 10/1999" wird das Verhalten solcher Solen sowie möglicher Alternativen ausführlich beschrieben. Als Alternativen werden vor allem Kälteträger auf der Basis organischer Salze auf Acetat- bzw. Formiatbasis vorgestellt. Kälteträger und notwendige Korrosionsinhibitoren dürfen nicht chemisch miteinander reagieren. Die verfügbaren Kältemittelkonzentrate enthalten auch Härtestabilisatoren, Entschäumer und ggf. Farbstoffe. Auch hier sind chemische Reaktionen zu vermeiden. Eine detaillierte Darstellung findet sich hierzu auch in der EP 897 417 B1.

Die Aufgabe der Erfindung ist daher, leckagebedingt aus einem Wärmeübertrager einer Wärmepumpe in den Wärmeträgerkreislauf eingetretenes Arbeitsfluid aus dem Wärmeträgerfluids zu entfernen.

Die Aufgabe wird gelöst durch eine Extraktionsstation zum Extrahieren von kohlenwasserstoffhaltigem gelösten Gas aus einer Leckage, die in einem Wärmeübertrager einer Wärmepumpe auftritt, die Wärmepumpe einen linksdrehenden thermodynamischen Kreisprozess mittels eines kohlenwasserstoffhaltigen Arbeitsfluids, welches in einem geschlossenen, hermetisch dichten Arbeitsfluidumlauf geführt wird, aufweisend ferner mindestens einen Verdichter für Arbeitsfluid, mindestens eine Entspannungseinrichtung für Arbeitsfluid, mindestens zwei Wärmeübertrager für Arbeitsfluid mit jeweils mindestens zwei Anschlüssen für Wärmeüberträgerfluide, von denen wenigstens eine an einen Wärmeträgerumlauf mit einem Wärmeträgerfluid und einer Umwälzpumpe angeschlossen ist, wobei
- die Umwälzpumpe auf der Zuströmseite des Wärmeübertragers angeordnet ist und zwischen der Umwälzpumpe und dem Wärmeübertrageranschluss eine Rückflusssperre vorgesehen ist, welche ein Rückströmen aus Richtung des Wärmeübertragers verhindert,
- auf der Abströmseite des Wärmeübertragers ein automatischer Gasabscheider angeordnet ist,
- die Abluftleitung des automatischen Gasabscheiders eine Messeinrichtung für den gasförmigen Kohlenwasserstoff, welcher das Arbeitsfluid bildet, aufweist,
- nach dem Gasabscheider im Wärmeträgerstrom ein zuschaltbarer Bypass und ein schaltbares Absperrventil vorgesehen sind,
- der zuschaltbare Bypass in einen Extraktor geführt wird,
- der Extraktor eine Zugabestelle für ein Extraktionsmittel, einen statischen Mischer und einen Ablass für ein flüssiges Zweiphasengemisch aufweist,
- der Ablass für das flüssige Zweiphasengemisch mit einem Abscheider für flüssige Zweiphasengemische verbunden ist,
- der Abscheider einem Ablass für die leichtere Phase mit dem Extraktionsmittel und dem darin gelösten Kohlenwasserstoff sowie einen weiteren Ablass für die schwerere wässrige Phase mit dem Wärmeträgerfluid aufweist,
- der Ablass für die schwerere wässrige Phase mit dem Wärmeträgerfluid mit dem Hauptstrom hinter dem Absperrventil verbunden ist,
- und der Ablass für die leichtere Phase mit dem Extraktionsmittel mit einem Extraktionsmittelbehälter verbunden ist.

In Ausgestaltungen der Extraktionsstation ist vorgesehen, dass
- der Extraktionsmittelbehälter einen Anschluss für ein Inertgas aufweist sowie Einrichtungen zum Strippen des Extraktionsmittels sowie einen Abzug für beladenes Strippgas,
- der Abzug für beladenes Strippgas mit dem Abgas des automatischen Gasabscheiders verbunden ist und dieser gemeinsame Abzug ins Freie oder in einen Aufbewahrungsbehälter geführt ist.

Die Aufgabe wird auch gelöst durch ein entsprechendes Verfahren zum Extrahieren von einem Kohlenwasserstoff aus einer Leckage, die in einem Wärmeübertrager einer Wärmepumpe (1) in einer Vorrichtung wie oben beschrieben auftritt, wobei
- auf ein Signal einer Kohlenwasserstoff-Messeinrichtung der Wärmeträgerfluidstrom in einen Bypass geleitet wird, wobei gleichzeitig der Hauptstrom abgesperrt wird,
- der Wärmeträgerfluidstrom in einen Extraktor geleitet wird, wo er intensiv mit einem Extraktionsmittel durchmischt wird, in welchem sich der Kohlenwasserstoff löst,
- danach die Mischung in einen Abscheider für flüssige Zweiphasengemische geführt wird, wo eine Trennung der beiden flüssigen Phasen in ein gereinigtes Wärmeträgerfluid und ein mit Kohlenwasserstoff beladenes Extraktionsmittel erfolgt,
- das gereinigte Wärmeträgerfluid wieder in den Hauptstrom des Wärmeträgerfluidkreislaufs zurückgeführt wird,
- und das beladene Extraktionsmittel in einen Extraktionsmittelbehälter geführt wird.

In einer Ausgestaltung des Verfahrens ist vorgesehen, dass das beladene Extraktionsmittel mit einem Inertgas im Extraktionsmittelbehälter gestrippt wird und das abgestrippte Gas mit dem abgeschiedenen Gas des automatischen Gasabscheiders vermischt und ins Freie oder in eine Aufbewahrungsvorrichtung geleitet wird.

Wenn aus einem der Wärmeübertrager, die als Kondensator oder Verdampfer betrieben werden, Arbeitsfluid aus einer Leckage in einen der Wärmeträgerkreisläufe austritt, ist zunächst nicht bekannt, wie groß die Leckage ist und wie sich der zeitliche Verlauf des Austritts entwickeln wird. In vielen Fällen wird man den Arbeitsfluidkreislauf stoppen und das Arbeitsfluid einsperren oder abpumpen können. Die meisten Leckagen sind jedoch klein und das entzündliche Arbeitsfluid perlt in Form kleiner Gasblasen in das Wärmeträgerfluid ein.

Anders liegen die Dinge, wenn plötzlich eine größere Leckage auftritt, etwa durch einen großen Riss in einem der Plattenwärmeübertrager in der Folge von Verschmutzungen oder Spänen aus Montagerückständen, die sich im Wärmeträgerfluid befunden haben. Dann kann es sein, dass für Absperrmaßnahmen im Arbeitsfluidkreislauf nicht genug Zeit ist. Leider weiß man das nicht vorher, daher ist auch für diesen seltenen Fall Vorsorge zu treffen.

Das Problem bei einem größeren Riss und einem schnellen Austritt von Arbeitsfluid besteht darin, dass das Wärmeträgerfluid über weite Strecken vom gasförmigen Arbeitsfluid verdrängt werden könnte, da das Arbeitsfluid üblicherweise unter deutlich höherem Druck steht, als das Wärmeträgerfluid. Diese Verdrängung bewirkt, dass übliche Fördereinrichtungen wie Hocheffizienz-Umwälzpumpen trockenfallen und beschädigt werden, außerdem aber auch kein Wärmeträgerfluid mehr fördern können, es entstehen sogenannte Gassäcke. Man bekommt die Gassäcke also nicht mehr aus dem Wärmeträgerfluidkreislauf auf ungefährliche Weise wieder heraus, wenn die Strömung zusammenbricht.

Um dies zu verhindern, wird direkt im Anschluss an den Wärmeübertrager ein automatischer Gasabscheider vorgesehen, der ins Freie entlüftet, wenn es sich um einen unschädlichen Stoff handelt, oder in eine Auffangvorrichtung. Die Abluft des Gasabscheiders ist dabei mit einem Gassensor versehen.

Außerdem wird vorgesehen, dass die Umwälzpumpen für das Wärmeträgerfluid auf der Zuströmseite des jeweiligen Wärmeübertragers angeordnet werden. Um sicherzustellen, dass bei einem leckagebedingten Austritt das Arbeitsfluid das Wärmeträgerfluid nicht in Gegenrichtung zur vorgesehenen Strömungsrichtung durch die Umwälzpumpe drücken kann und auf diesem Weg in die Umwälzpumpe gelangt, wird die Umwälzpumpe durch eine Rückflusssperre gesichert.

Auf der Abströmseite des jeweiligen Wärmeübertragers wird ein zuschaltbarer Bypass vorgesehen, der in eine Extraktionsstation führt. Sobald der Gassensor des automatischen Gasabscheiders entzündliches Gas erkennt, wird der Hauptstrom des Wärmeträgerfluids geschlossen und das Wärmeträgerfluid wird in die Extraktionsstation geleitet. In dieser Extraktionsstation wird das Extraktionssmittel dem Wärmeträgerfluid zugeführt und beide Phasen werden in einem statischen Mischer intensiv durchmischt. Dabei geht das Alkan aus dem Arbeitsfluid in das Extraktionsmittel über. In einem nachfolgenden Phasenabscheider wird das Extraktionsmittel, welches üblicherweise die leichtere Phase ist, über Kopf abgeschieden. Das Wärmeträgerfluid wird wieder dem Hauptstrom zugeführt.

Das Extraktionsmittel mit dem darin gelösten Alkan, meistens R290, wird entweder verworfen und in einem Tank zur Abholung gelagert oder es wird vor Ort regeneriert. Dies kann entweder durch Erhitzen oder durch Strippen mit Inertgas oder mittel Fällung durch Abkühlung erfolgen. Die Extraktionsstation kann auch mobil durch ein Wartungsteam angeschlossen werden, in diesem Fall muss der Wärmeträgerkreislauf solange gestoppt werden, bis die Extraktion erfolgt.

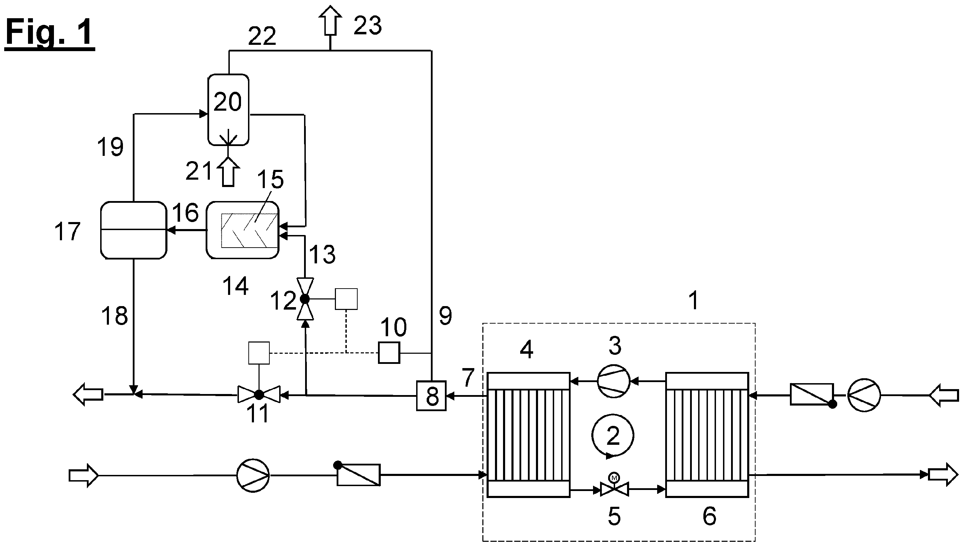

Fig. 1 zeigt ein Verfahrensfließbild mit einer Extraktionsvorrichtrung für einen der beiden Wärmeübertrager, wobei die Extraktionsvorrichtung für den anderen Wärmeübertrager identisch aufgebaut sein kann.

Die Wärmepumpe 1 weist einen linksdrehenden Kreisprozess 2 mit einem Verdichter 3, einem Kondensator 4, einem Entspannungsventil 5 und einem Verdampfer 6 auf. Im Heizbetrieb wird das Wärmeträgerfluid 7 aus dem Kondensator 4 abgezogen und in den automatischen Gasabscheider 8 geleitet. Das darin abgeschiedene Gas 9 wird in der Messvorrichtung 10 auf entzündliches Gas getestet. Falls entzündliches Gas erkannt wird, wird das Absperrventil 11 geschlossen, das Ventil zum Bypass 12 der Verbindungsleitung 13 zum Extraktionsbehälter 14 wird geöffnet.

Im Extraktionsbehälter 14 trifft das Wärmeträgerfluid auf das Extraktionsmittel und wird mit ihm im statischen Mischer 15 intensiv durchmischt. Die Mischung wird über die Verbindungsleitung 16 in den Dekanter 17 geleitet, wo die beiden flüssigen Phasen voneinander getrennt werden. Die schwere Phase ist das Wärmeträgerfluid, welches durch die Abzugsleitung 18 abgezogen und wieder dem Hauptstrom des Wärmeträgerfluids zugeführt wird.

Die leichtere Phase bildet das beladene Extraktionssmittel und wird aus dem Dekanter 17 über die Leitung 19 abgezogen und einen Strippbehälter 20 gefördert, wo mittels Inertgas 21 der Kohlenwasserstoff aus dem Extraktionsmittel abgestrippt wird. Das beladene Strippgas 22 wird mit dem vom automatischen Gasabscheider 8 abgeschiedenen Gas 9 vermischt und als Abgas 23 ins Freie geleitet, wenn es unschädlich ist, oder in eine Auffangvorrichtung (nicht gezeigt).

### Liste der Bezugszeichen

- 1: Wärmepumpe
- 2: Kreisprozess
- 3: Verdichter
- 4: Kondensator
- 5: Entspannungsventil
- 6: Verdampfer
- 7: Wärmeträgerfluid
- 8: Gasabscheider
- 9: abgeschiedenes Gas
- 10: Messvorrichtung
- 11: Absperrventil
- 12: Bypass
- 13: Verbindungsleitung
- 14: Extraktionsbehälter
- 15: statischer Mischer
- 16: Verbindungsleitung
- 17: Dekanter
- 18: Abzugsleitung
- 19: Leitung
- 20: Strippbehälter
- 21: Inertgas
- 22: beladenes Strippgas
- 23: Abgas

## Patentansprüche

1. Extraktionsstation zum Extrahieren von kohlenstoffhaltigem gelösten Gas aus einer Leckage, die in einem Wärmeübertrager einer Wärmepumpe (1) auftritt, die Wärmepumpe (1) einen linksdrehenden thermodynamischen Kreisprozess (2) mittels eines alkanhaltigen Arbeitsfluids, welches in einem geschlossenen, hermetisch dichten Arbeitsfluidumlauf geführt wird, aufweisend ferner mindestens einen Verdichter (3) für Arbeitsfluid, mindestens eine Entspannungseinrichtung (5) für Arbeitsfluid, mindestens zwei Wärmeübertrager (4, 6) für Arbeitsfluid mit jeweils mindestens zwei Anschlüssen für Wärmeüberträgerfluide, von denen wenigstens eine an einen Wärmeträgerumlauf mit einem Wärmeträgerfluid und einer Umwälzpumpe angeschlossen ist,
**dadurch gekennzeichnet, dass**
- die Umwälzpumpe auf der Zuströmseite des Wärmeübertragers (4, 6) angeordnet ist und zwischen der Umwälzpumpe und dem Wärmeübertrageranschluss eine Rückflusssperre vorgesehen ist, welche ein Rückströmen aus Richtung des Wärmeübertragers (4, 6) verhindert,
- auf der Abströmseite des Wärmeübertragers (4, 6) ein automatischer Gasabscheider (8) angeordnet ist,
- die Abluftleitung (9) des automatischen Gasabscheiders (8) eine Messeinrichtung für den gasförmige Kohlenwasserstoff, welcher das Arbeitsfluid bildet, aufweist,
- nach dem Gasabscheider (8) im Wärmeträgerstrom ein zuschaltbarer Bypass (12) und ein schaltbares Absperrventil (11) vorgesehen sind,
- der zuschaltbare Bypass (12) in einen Extraktor (14) geführt wird,
- der Extraktor (14) eine Zugabestelle für ein Extraktionsmittel, einen statischen Mischer (15) und einen Ablass (16) für ein flüssiges Zweiphasengemisch aufweist,
- der Ablass (16) für das flüssige Zweiphasengemisch mit einem Abscheider (17) für flüssige Zweiphasengemische verbunden ist,
- der Abscheider (17) einen Ablass für die leichtere Phase mit dem Extraktionsmittel und dem darin gelösten Kohlenwasserstoff sowie einen weiteren Ablass für die schwerere wässrige Phase mit dem Wärmeträgerfluid aufweist,
- der Ablass für die schwerere wässrige Phase mit dem Wärmeträgerfluid mit dem Hauptstrom hinter dem Abperrventil verbunden ist,
- und der Ablass für die leichtere Phase mit dem Extraktionsmittel mit einem Extraktionsmittelbehälter (20) verbunden ist.

2. Extraktionsstation nach Anspruch 1, **dadurch gekennzeichnet, dass** der Extraktionsmittelbehälter (20) einen Anschluss für ein Inertgas (21) aufweist sowie Einrichtungen zum Strippen des Extraktionsmittels sowie einen Abzug für beladenes Strippgas (22).

3. Extraktionsstation nach Anspruch 2, **dadurch gekennzeichnet, dass** der Abzug für beladenes Strippgas (22) mit dem Abgas (9) des automatischen Gasabscheiders (8) verbunden ist und dieser gemeinsame Abzug (23) ins Freie oder in einen Aufbewahrungsbehälter geführt ist.

4. Verfahren zum Extrahieren von einem Kohlenwasserstoff aus einer Leckage, die in einem Wärmeübertrager einer Wärmepumpe (1) in einer Vorrichtung nach Anspruch 1 auftritt, **dadurch gekennzeichnet, dass**
- auf ein Signal einer Kohlenwasserstoff-Messeinrichtung (10) der Wärmeträgerfluidstrom in einen Bypass (12) geleitet wird, wobei gleichzeitig der Hauptstrom abgesperrt wird,
- der Wärmeträgerfluidstrom in einen Extraktor (14) geleitet wird, wo er intensiv mit einem Extraktionsmittel durchmischt wird, in welchem sich der Kohlenwasserstoff löst,
- danach die Mischung in einen Abscheider (17) für flüssige Zweiphasengemische geführt wird, wo eine Trennung der beiden flüssigen Phasen in ein gereinigtes Wärmeträgerfluid und ein mit Kohlenwasserstoff beladenes Extraktionsmittel erfolgt,
- das gereinigte Wärmeträgerfluid wieder in den Hauptstrom des Wärmeträgerfluidkreislaufs zurückgeführt wird,
- und das beladene Extraktionsmittel in einen Extraktionsmittelbehälter (20) geführt wird.

5. Verfahren nach Anspruch 4, **dadurch gekennzeichnet, dass** das beladene Extraktionsmittel mit einem Inertgas im Extraktionsmittelbehälter gestrippt wird und das abgestrippte Gas mit dem abgeschiedenen Gas des automatischen Gasabscheiders vermischt und ins Freie oder in eine Aufbewahrungsvorrichtung geleitet wird.

6. Verwendung von schwer entflammbaren Fetten und Ölen als Extraktionsmittel in einem Verfahren nach einem der Ansprüche 4 oder 5 in einer Vorrichtung nach einem der Ansprüche 1 bis 3.
